# EUROPEAN PATENT APPLICATION

(11) **EP 4 553 693 A1**
(43) Date of publication of application: **14.05.2025**
(21) Application number: 24200348.1
(22) Date of filing: 13.09.2024
(51) Int. Cl.: G06F 30/18, G06F 30/27, G06F 30/28, G06F 111/04, G06F 113/14

(54) **FRAMEWORK FOR EARLY-STAGE GENERATIVE DESIGN OF ENGINEERING SYSTEMS**

(30) Priority: 08.11.2023 IN 202321076298
(71) Applicant: Tata Consultancy Services Limited, Maharashtra (IN)
(72) Inventor: MUHAMMED, BILAL, 695581 Trivandrum- Kerala (IN); JOSHI, AMOL DILIP, 411057 Pune- Maharashtra (IN); BEEMARAJ, SOBAN BABU, 411057 Pune- Maharashtra (IN); BASAVARSU, PURUSHOTTHAM GAUTHAM, 411057 Pune- Maharashtra (IN); PATHAN, RIZWAN KHAN, 411057 Pune- Maharashtra (IN); SINGH, UMESH, 411057 Pune- Maharashtra (IN)
(74) Representative: Goddar, Heinz J.

(57) **Abstract**

Early-stage design for complex engineering systems is a difficult task with significant impact on the final design and is performed under time constraints which restricts the number of options being considered. Present disclosure provides a framework for an early-stage generative design of engineering systems by performing systematic design space exploration and targeted design space exploration. Diverse design configurations are generated for given requirements following a systematic design space exploration of the entire architectural design space of the early-stage problem. In the targeted design space exploration stage, potential regions of the design space are identified to generate different alternatives to the diverse design configurations already generated during the systematic design space exploration stage for early-stage generative design of a given engineering system.

## Description

### CROSS-REFERENCE TO RELATED APPLICATIONS AND PRIORITY

The present application claims priority to Indian application no. 202321076298, filed on November 8, 2023.

### TECHNICAL FIELD

The disclosure herein generally relates to engineering design, and, more particularly, to frameworks for early-stage generative design of engineering systems.

### BACKGROUND

Early-stage design for complex engineering systems such as a power plant, subsea systems, or a chemical processing plant, is a difficult task with significant impact on the final design. It is generally known that cost decisions get locked up at this stage. During this phase of early design, designers are expected to come up with multiple design configurations that meet the requirements and rely heavily on their expertise, experience, and imagination. Often this process is performed under time constraints which restricts the number of options they consider. At times, designers may resort to variant design, where an existing design configuration is modified to satisfy new requirements and/or new constraints without really exploring the other possibilities. As a result, many possible good design configurations may be overlooked or missed out leading to suboptimal design. In the case of a system of systems, design decisions are much more complicated as there are multiple interacting systems involved. The design option space of each system can be large, which can add up to a huge architectural design space to consider for the overall design of the system of systems.

### SUMMARY

Embodiments of the present disclosure present technological improvements as solutions to one or more of the above-mentioned technical problems recognized by the inventors in conventional systems.

For example, in one aspect, there is provided a processor implemented method for early-stage generative design of engineering systems. The method comprises receiving, via one or more hardware processors, one or more design inputs, one or more design constraints, one or more design criteria, and one or more diversity metrics from a designer; generating, by using a design configuration generator via the one or more hardware processors, a plurality of diverse design configurations using the one or more design inputs, and the one or more design constraints; evaluating, via the one or more hardware processors, (i) an associated diversity of each diverse design configuration from the plurality of diverse design configurations using the one or more diversity metrics, and (ii) the one or more design criteria and ranking the plurality of evaluated diverse design configurations; receiving, via the one or more hardware processors, one or more potential regions of design space for an enhanced targeted exploration based on the plurality of ranked diverse design configurations; iteratively applying a targeted exploration, via the one or more hardware processors, on the one or more potential regions of design space, until one or more desired design configurations are obtained; and selecting, via the one or more hardware processors, at least one desired design configuration amongst the one or more desired design configuration.

In an embodiment, the one or more diversity metrics are used for evaluating an overall diversity of all the plurality of diverse design configurations.

In an embodiment, each ranked diverse design configuration from the plurality of ranked diverse design configurations is compared with each other to determine level of difference therebetween.

In an embodiment, the step of receiving, the one or more design inputs, the one or more design constraints, the one or more design criteria, and the one or more diversity metrics from the designer is preceded by: analyzing an overall design problem, wherein the overall design problem is hierarchically decomposed into one or more constituents sub-problems; performing, by using one or more pre-determined strategies, a classification of the one or more constituent sub-problems as one or more options generators or one or more optimization problems, wherein the one or more options generators are configured to identify one or more high performing solutions; and selecting, by using the one or more pre-determined strategies, (i) a solution algorithm amongst one or more solution algorithms for the one or more optimization problems or (ii) a pre-determined option generation strategy for the one or more options generator based on the classification.

In an embodiment, the one or more pre-determined strategies comprise a selection of at least one (i) a set of high performing diverse solutions, (ii) a logical division of a design space, (iii), an available options consideration, (iv) a multiple heuristic approaches usage, and (v) an adversarial neural network or a generative artificial intelligence technique.

In another aspect, there is provided a processor implemented system for early-stage generative design of engineering systems. The system comprises: a memory storing instructions; one or more communication interfaces; and one or more hardware processors coupled to the memory via the one or more communication interfaces, wherein the one or more hardware processors are configured by the instructions to: receive one or more design inputs, one or more design constraints, one or more design criteria, and one or more diversity metrics from a designer; generating, by using a design configuration generator, a plurality of diverse design configurations using the one or more design inputs, and the one or more design constraints; evaluating (i) an associated diversity of each diverse design configuration from the plurality of diverse design configurations using the one or more diversity metrics, and (ii) the one or more design criteria and ranking the plurality of evaluated diverse design configurations; receiving one or more potential regions of design space for an enhanced targeted exploration based on the plurality of ranked diverse design configurations; iteratively applying a targeted exploration on the one or more potential regions of design space, until one or more desired design configurations are obtained; and selecting at least one desired design configuration amongst the one or more desired design configuration.

In an embodiment, the one or more diversity metrics are used for evaluating an overall diversity of all the plurality of diverse design configurations.

In an embodiment, each ranked diverse design configuration from the plurality of ranked diverse design configurations is compared with each other to determine level of difference therebetween.

In an embodiment, the step of receiving, the one or more design inputs, the one or more design constraints, the one or more design criteria, and the one or more diversity metrics from the designer is preceded by: analyzing an overall design problem, wherein the overall design problem is hierarchically decomposed into one or more constituents sub-problems; performing, by using one or more pre-determined strategies, a classification of the one or more constituent sub-problems as one or more options generators or one or more optimization problems, wherein the one or more options generators are configured to identify one or more high performing solutions; and selecting, by using the one or more pre-determined strategies, (i) a solution algorithm amongst one or more solution algorithms for the one or more optimization problems or (ii) a pre-determined option generation strategy for the one or more options generator based on the classification.

In an embodiment, the one or more pre-determined strategies comprise a selection of at least one (i) a set of high performing diverse solutions, (ii) a logical division of a design space, (iii), an available options consideration, (iv) a multiple heuristic approaches usage, and (v) an adversarial neural network or a generative artificial intelligence technique.

In yet another aspect, there are provided one or more non-transitory machine-readable information storage mediums comprising one or more instructions which when executed by one or more hardware processors cause early-stage generative design of engineering systems by receiving one or more design inputs, one or more design constraints, one or more design criteria, and one or more diversity metrics from a designer; generating, by using a design configuration generator, a plurality of diverse design configurations using the one or more design inputs, and the one or more design constraints; evaluating (i) an associated diversity of each diverse design configuration from the plurality of diverse design configurations using the one or more diversity metrics, and (ii) the one or more design criteria and ranking the plurality of evaluated diverse design configurations; receiving one or more potential regions of design space for an enhanced targeted exploration based on the plurality of ranked diverse design configurations; iteratively applying a targeted exploration on the one or more potential regions of design space, until one or more desired design configurations are obtained; and selecting at least one desired design configuration amongst the one or more desired design configuration.

In an embodiment, the one or more diversity metrics are used for evaluating an overall diversity of all the plurality of diverse design configurations.

In an embodiment, each ranked diverse design configuration from the plurality of ranked diverse design configurations is compared with each other to determine level of difference therebetween.

In an embodiment, the step of receiving, the one or more design inputs, the one or more design constraints, the one or more design criteria, and the one or more diversity metrics from the designer is preceded by: analyzing an overall design problem, wherein the overall design problem is hierarchically decomposed into one or more constituents sub-problems; performing, by using one or more pre-determined strategies, a classification of the one or more constituent sub-problems as one or more options generators or one or more optimization problems, wherein the one or more options generators are configured to identify one or more high performing solutions; and selecting, by using the one or more pre-determined strategies, (i) a solution algorithm amongst one or more solution algorithms for the one or more optimization problems or (ii) a pre-determined option generation strategy for the one or more options generator based on the classification.

In an embodiment, the one or more pre-determined strategies comprise a selection of at least one (i) a set of high performing diverse solutions, (ii) a logical division of a design space, (iii), an available options consideration, (iv) a multiple heuristic approaches usage, and (v) an adversarial neural network or a generative artificial intelligence technique.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for early-stage generative design of engineering systems, in accordance with an embodiment of the present disclosure.
FIG. 2 depicts an exemplary high level flow diagram of the system of FIG. 1 illustrating a method for early-stage generative design of engineering systems, in accordance with an embodiment of the present disclosure.
FIG. 3 depicts an exemplary flow chart illustrating a method for early-stage generative design of engineering systems, using the system of FIG. 1, in accordance with an embodiment of the present disclosure.
FIG. 4 depicts a flow diagram illustrating a method for synthesizing design configurations, in accordance with an embodiment of the present disclosure.
FIG. 5 depicts a block diagram illustrating options generation strategies as implemented by the system of FIG. 1, in accordance with an embodiment of the present disclosure.
FIG. 6 depicts systematic design space exploration (SDSE) for water distribution system use case, in accordance with an embodiment of the present disclosure.
FIG. 7 depicts a targeted design space exploration (TDSE) for water distribution system use case, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As described above, early-stage design for complex engineering systems such as a power plant, subsea systems, or a chemical processing plant, is a difficult task with significant impact on the final design. It is generally known that cost decisions get locked up at this stage. During this phase of early design, designers are expected to come up with multiple design configurations that meet the requirements and rely heavily on their expertise, experience, and imagination. Often this process is performed under time constraints which restricts the number of options they consider. At times, designers may resort to variant design, where an existing design configuration is modified to satisfy new requirements and/or new constraints without really exploring the other possibilities. As a result, many possible good design configurations may be missed out leading to suboptimal design.

Embodiments of the present disclosure provide a framework for an early-stage generative design of engineering systems. In this context, complex engineering systems indicates design problems of system of systems level complexity such as a power plant, city water distribution system, or chemical processing plant. It is to be understood by a person having ordinary skill in the art or person skilled in the art that the above examples of engineering systems shall not be construed as limiting the scope of the present disclosure. The generative design method described by the system of the present disclosure is divided into two stages:
1. Systematic design space exploration
2. Targeted design space exploration (as per evaluation criteria)

More specifically, multiple diverse design configurations are generated for the given requirements following a systematic design space exploration of the entire architectural design space of the early-stage problem. The aim here is to explore diverse regions of the design space systematically irrespective of whether they look promising or not. The systematic design space exploration stage consists of the following steps.
a) Systematically dividing the design space. The division can be defined at each hierarchical levels of the sub-problems. Computational time complexity of the various sub-problems and computational resources available should be considered during this process.
b) Generate design configurations corresponding to all the identified regions in step (a).
c) Ranking the generated design configurations based on various design criteria and diversity metrics.

As this is an exhaustive design exploration which mandatorily generates solutions in the various identified regions in the design space, it is more likely to generate diverse design configurations. This step is ideally performed once unless there is any change in the problem definition or design inputs. The various design inputs and design constraints provided by the designer are consumed by a design configuration generator stored in the system and invoked to produce several design configuration alternatives. The various design configuration alternatives are provided to the design evaluator stored in the system and invoked, which utilizes one or more design criteria and diversity metrics to rank the design configuration alternatives and evaluate the diversity in the solutions. Multicriteria ranking approaches such as ELECTRE can be used to rank the design configurations generated based on various design criteria. These ranked design configurations are provided to the designer. The diversity metrics can be used to evaluate the overall set diversity of all the design configurations generated, and on an individual level how different the top configurations are with respect to each other. By translating design diversity into numerical metrics that algorithms can comprehend, designers can efficiently measure and analyze diverse design sets, leading to more compelling solutions. Various metrics, such as smallest enclosing hypersphere, convex hull, and DPP diversity score, describe diversity within a set of design configurations. Metrics evaluating individual diversity, like distance to centroid, inter-sample distance, and nearest datapoint, empower designers to identify high-performing and diverse solutions, avoiding biases and premature convergence.

In the targeted design space exploration stage, the designer identified promising regions of the design space defined in step (a) of systematic design space exploration are used to generate different alternatives to the design configurations already generated during the systematic design space exploration stage. Optionally, the designer can provide qualitative evaluation of the design alternatives to provide input to the enhanced targeted explorer as to where the most desirable solutions lie. In addition to the various methods for options generator used in systematic design space exploration (SDSE) stage, the data generated during the SDSE stage can be used to generate alternatives using methods such as adversarial NNs/generative AI. Multiple iterations may be required to converge to the finalized design configurations of the early-stage design. The design configuration alternatives generated through targeted exploration is then evaluated by the design evaluator. The process is iterative, and designers can utilize the targeted explorer to explore further design configurations.

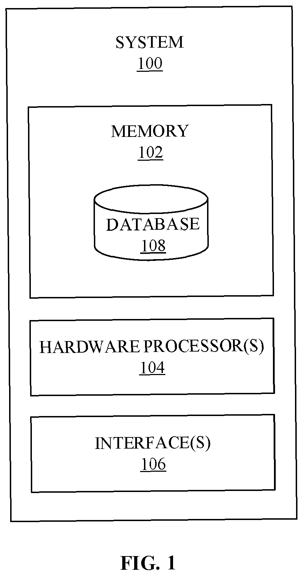

Referring now to the drawings, and more particularly to FIGS. 1 through 7, where similar reference characters denote corresponding features consistently throughout the figures, there are shown preferred embodiments and these embodiments are described in the context of the following exemplary system and/or method.

FIG. 1 depicts an exemplary system 100 for early-stage generative design of engineering systems, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to one or more design inputs, one or more design constraints, one or more design criteria, and one or more diversity metrics of engineering systems. The database 108 further comprises one or more diverse design configurations, one or more potential regions of design space for an enhanced targeted exploration, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

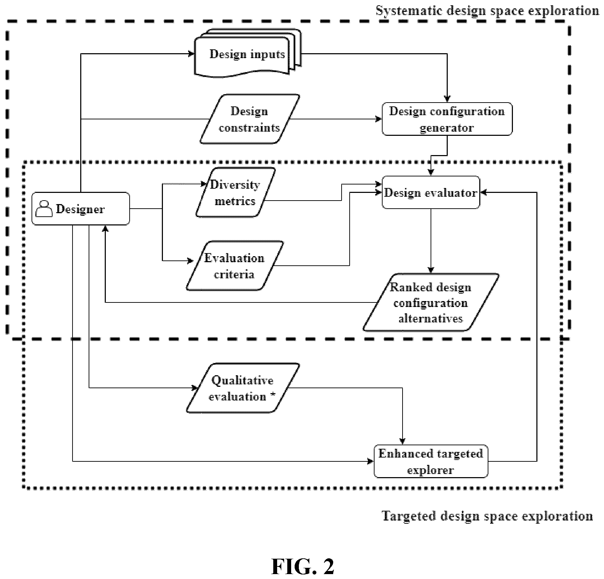

FIG. 2 depicts an exemplary high level flow diagram of the system 100 of FIG. 1 illustrating a method for early-stage generative design of engineering systems, in accordance with an embodiment of the present disclosure.

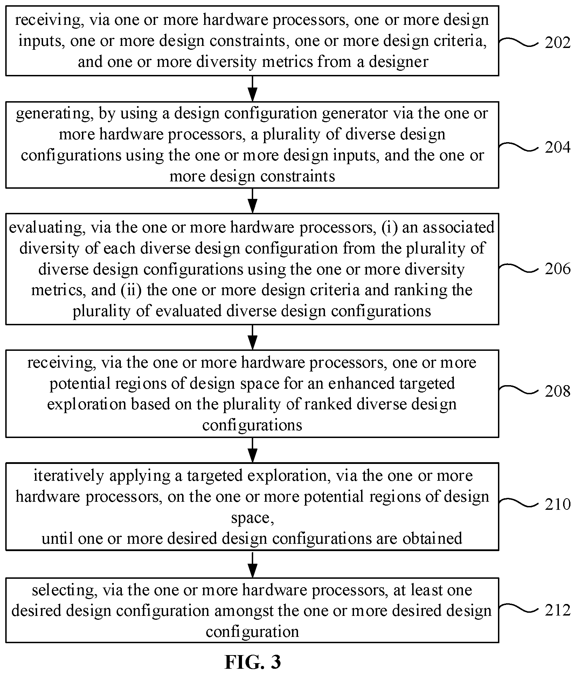

FIG. 3 depicts an exemplary flow chart illustrating a method for early-stage generative design of engineering systems, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the flow diagram of the system 100 depicted in FIG. 2, and the flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

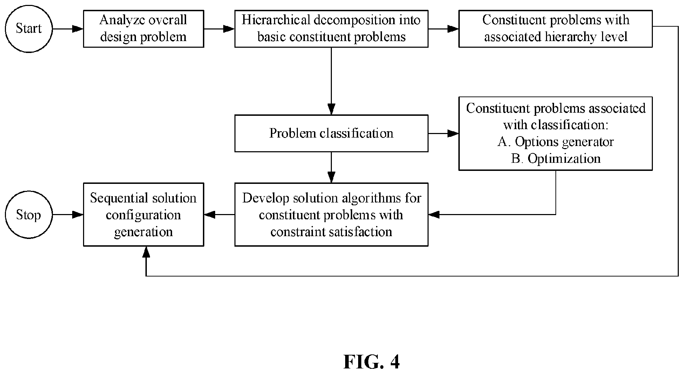

At step 202 of the method of the present disclosure, the one or more hardware processors 104 receive one or more design inputs, one or more design constraints, one or more design criteria, and one or more diversity metrics from a designer. The design inputs, design constraints, design criteria, and diversity metrics pertain to an engineering system, in one embodiment of the present disclosure. The engineering system may comprise, but is not limited to, a water distribution system, in an embodiment of the present disclosure. The one or more diversity metrics are used for evaluating an overall diversity of all the plurality of diverse design configurations, in one embodiment of the present disclosure. Prior to receiving the one or more design inputs, the one or more design constraints, the one or more design criteria, and the one or more diversity metrics from the designer, the system 100 is configured to analyze an overall design problem. The overall design problem is hierarchically decomposed into one or more constituent sub-problems. Further, by using one or more pre-determined strategies, the one or more constituent sub-problems are classified as one or more options generators or one or more optimization problems. The one or more options generators are configured to identify one or more high performing solutions. Further, by using the one or more pre-determined strategies, the system 100 is configured to select (i) a solution algorithm amongst one or more solution algorithms for the one or more optimization problems, or (ii) a pre-determined option generation strategy for the one or more options generator based on the classification. The solution algorithms are stored in the memory 102/database 108 and invoked for execution of the method of the present disclosure. FIG. 4, with reference to FIGS. 1 through 3, depicts a flow diagram illustrating a method for synthesizing design configurations, in accordance with an embodiment of the present disclosure. The various components for synthesizing are stored in the memory 102 (not shown in FIGS.) and invoked for execution by the system 100 to perform the method and the components are described below.
1. Problem decomposition and sequence modeling workbench: This workbench can be used (e.g., by a designer) to hierarchically decompose the overall design problem, assign hierarchy levels to problems, and classify the constituent sub-problem as an options generator or an optimization problem.
2. Problem nature categorizer: The problems are categorized based on their nature to aid in algorithm selection later. The problems are categorized into predefined types such as selection, path planning, assignment problem, or constrained optimization problem.
3. Algorithms module: This module contains a set of predefined algorithms (e.g., also referred to as solution algorithm and interchangeably used herein) that can be used to generate options/solve for various standard problem types identified. In addition, problem specific algorithms can be developed and hosted on this module.
4. Problem specific solution workflow modeling workbench: This workbench can be used by the system 100 (or designer) to model the solution workflows for each constituent design sub-problem utilizing the solution algorithm(s) from Algorithms module. The design inputs, outputs, evaluation criteria, and diversity metric can be wired into the workflow from the problem ontology.
5. Configuration synthesis engine: This engine executes the design process sequentially to generate multiple design configurations utilizing the above components. A top-down design generation can be selected for designing known systems where the design space is generally known. A bottom-up design generation approach can be used in cases which is more exploration oriented.

The one or more pre-determined strategies comprise a selection of at least one (i) a set of high performing diverse solutions, (ii) a logical division of a design space, (iii), an available options consideration, (iv) a multiple heuristic approaches usage, and (v) an adversarial neural network and/or a generative artificial intelligence (GenAI) technique. The above techniques/strategies such as (i) the set of high performing diverse solutions, (ii) the logical division of a design space, (iii), the available options consideration, (iv) the multiple heuristic approaches usage, and (v) the adversarial neural network and/or the generative artificial intelligence (GenAI) technique are stored in the memory 102 (or the database 108) and invoked for execution of the method of the present disclosure accordingly. Various option generation strategies that can be adopted for a given constituent sub-problem are listed below.
a. Select high performing diverse solutions provided by problem specific algorithm: In this approach, a problem specific solution algorithm can be modified to store and evaluate the diversity of the high performing solutions identified. The appropriate diversity metric for the problem can be selected and the number of solutions to be provided as output can be decided based on computational time, computational facilities available, and expected time frame for solution generation. For example, if the specific problem is a path design problem, the problem can be solved using a shortest path algorithm. This algorithm can be modified to evaluate multiple alternatives and the high performing solutions can be selected as output after considering diversity of solutions.
b. Logical division of design space: This can be applied to a design problem, if any of the design parameters can be used to logically divide the design space of the downstream problems. For example, in the case of a city water distribution problem, the number of booster pumps that needs to be placed strategically to increase the flow pressure is a critical decision. The number of booster pumps is a parameter that can be varied in a given range of numbers, thus exploring the design space corresponding to these choices separately. This can help in systematically exploring different areas of the design space, and later exploring a targeted region in the design space.
c. Available options consideration: In the case of decision problems such as a component selection problem, the components may be subject to availability. If the available options are large in number, a top set of solutions which are more appropriate can be selected.
d. Multiple heuristic approaches usage: This approach refers to usage of multiple heuristic solution approaches for the same problem which may yield different solutions due to the difference in their exploration/convergence approaches.
e. Adversarial NN / generative AI: In this approach, past design data or design solutions from other design approaches can be used to train and generate close alternative solution options using adversarial neural networks or generative AI techniques.

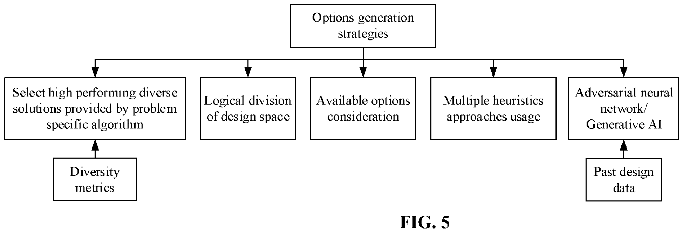

FIG. 5, with reference to FIGS. 1 through 4, depicts one or more option generation strategies that can be adopted for a given constituent sub-problem by the system 100 of FIG. 1, in accordance with an embodiment of the present disclosure.

The above steps can be better understood by way of following description:

The overall design problem is analyzed (e.g., with help of a design expert) and is hierarchically decomposed into basic constituent sub-problems. The sub-problems can be any one of component/assembly/process/material design, assignment, selection, allocation, layout design, path planning, scheduling, control design, interface/integration design, validation/verification, or any other type of decision problem in engineering design. The component/assembly/process/material design is combination of multiple problems which may involve geometric, material design along with any other design decision problem mentioned above. The level of detail to which the overall problem is decomposed has an impact on the number of variations in design solutions that are generated. The more detailed the decomposition, the more variations can be generated at individual sub-problem level, and the more computational resources and time that is required to facilitate the design. Therefore, decomposition of the overall design problem can be carried out considering the above aspects as well as computational resources available. The constituent sub problems and their associated hierarchy levels are finalized after this step. There can be multiple sub-problems with the same hierarchy level indicating that they can be solved in parallel without one's outcome affecting the other. The different hierarchy level denotes the hierarchical dependency of the various problems.

In the next step, these constituent sub-problems are classified as either an options generator or an optimization problem. An identified sub-problem can be classified as an optimization problem in the following scenarios:
1. When the problem has well defined objective(s) to be satisfied which are independent of the rest of the systems.
2. When considering the next best alternatives may not bring any value to the overall problem.

If the problem is formulated as a single objective/multi-objective optimization problem, then it can be solved using any appropriate standard optimization techniques available. It is preferable to consider a sub-problem as an options generator if it does not meet the criteria mentioned for optimization problem. In the case of an options generator, one or more design evaluation criteria may or may not exist. In an options generator, the objective is to find high performing solution alternatives while an optimization problem typically yields a single optimal solution. If it is a multi-objective optimization problem, multiple alternatives can be considered. Appropriate solution algorithms are devised for generating design solutions for the identified sub-problems based on the problem classification. These solution algorithms should incorporate the design constraints and generate design alternatives which are feasible. Finally, the overall design configurations are generated by sequentially generating the design fragments using varied solution algorithms, which are combined and filtered to maintain constraint compliance.

The problem statement is defined by the system 100 and method of the present disclosure as transporting of water from dam or reservoir to the defined residential/commercial/industrial locations with minimal cost as possible and meet the given criteria (e.g., to design the layout of a water distribution system for a town). The criteria for a water distribution system are pressure requirement at the household, volume requirement at the household, etc. The water transportation (distribution) system consists of pipelines, pumps, source (reservoir) and sink (demand) locations, valves, etc. The objective of the fluid distribution system design is to develop a network that minimizes the cost and achieving the required reliability level while meeting the operational requirements. Reliability is an important aspect of water distribution systems, which depends on how well a distribution system can adapt to situations of pipe breakage/leakage, accidents, natural hazards, fluctuations in demand, maintenance etc. and isolate the area of impact to provide water supply at desired conditions to other areas while the maintenance is going on. Along with current distribution of demand at various regions in the distribution area, future expectations also play a role in the design of a water distribution system.

A water distribution system is designed to supply a fluid from one or more source locations to multiple demand locations at the desired flowrate and pressure. This is achieved through a large number of pipelines connecting these source and demand locations forming a distribution network. The distribution system consists of the pipe network connecting various source and demand locations, flow pressure enhancing devices such as pumps or compressors, and flow control devices (valves) that diverts the water from one direction to another in case of repair or fire accidents. Pipe losses are an important aspect of water distribution systems which depends on various factors such as pipe roughness, diameter, flow velocity, length etc. which varies across straight parts and bends.

Generally, the fluid flows from the source to demand locations using a combination of gravity (the source locations are generally at higher elevations) and a pumping system. The pipe network is usually laid along the road networks in the distribution area. While the fluid pipes are laid and buried parallel to the roads, there are other networks like sewer pipes and telephone lines which should be avoided. The main considerations in a fluid distribution system are to minimize the overall cost and maximize the reliability of the system. Reliability is important from the perspective of pipe bursts/maintenance situations where the area of impact must be localized, and the distribution should not be disrupted for other parts of the network. The output of the first subproblem is source and demand locations. In this use case, it is assumed that subproblem one is solved, and output is available for use. As part of early-stage design, the system 100 and method of the present disclosure shall be focusing on the remaining subproblems.

Referring to step 202, the design inputs include, but are not limited to, source and demand locations (e.g., *.csv file containing coordinates of the source and demand locations, and corresponding production flowrate/demand flowrates), map of the distribution area with constructions, roads, sewer/electric/telephone lines (e.g., *.csv file contains restricted area., *.csv file contains road network details, and the like), standard pipeline diameters (e.g., *.csv file contains the standard pipeline diameter and its cost.), and the like. The design constraints include, but are not limited to, residual pressure at distribution locations should be within prescribed limits (*Pₘᵢₙ* ≤ *P(D,L)* ≤ *Pₘₐₓ*), velocity of flow at any pipe should be within the desired limits (*Vₘᵢₙ* ≤ *V*(*D,L*) ≤ *Vₘₐₓ*), pipelines should not cross each other, pipelines should keep a safety distance with any sewer/electric/telephone lines, pipelines should avoid any residential/commercial/industrial construction sites (restricted areas) - *pipes(edges)* ∉ {*exclusionarea*}, and the like. The design constraints can be better understood by way of following description:

The design criteria include, but are not limited to, minimize overall cost, maximize reliability, minimize number of crossings of water distribution pipelines with roads, and the like. The diversity metrics include but are not limited to, smallest enclosing hypersphere, convex hull, Determinantal Point Process (DPP) diversity score, individual diversity evaluation metrics, distance to centroid, inter-sample distance, nearest datapoint, and the like. The system 100 and method of the present disclosure consider the following assumptions:
1. Only tree/radial type of layout systems are considered.
2. The design of valves and booster pumps is not included in the early-stage design use case.

Below Table 1 depicts problem decomposition and solution approach development for water distribution system (e.g., engineering system)

**Table 1**

| Sub-problem no. | Problem description | Hierarchy level | Problem classification | Algorithmic approach |
|---|---|---|---|---|
| 1 | Determine the number of distribution zones | 0 | Options generator | Logical division of design space |
| 2 | Allocation of demand locations to distribution zones | 1 | Optimization/Options generator | |
| 3 | Selection of layout system | 2 | Options generator | Available options consideration |
| 4 | Pipeline network design for sub-mains and mains | 3 | Options generator | Problem specific approach to generate high performing solutions |

The identified sub-problems and their solution approach details are explained below.
1. Determine the number of distribution zones: In this problem, the number of zones to which the demand locations present the field are grouped is determined. This problem is treated as an options generator, and the logical division of design space approach is used. Based on the number of demand locations and their flowrate requirement in the field, a logical range (for example: 4 to 8 zones) is selected for the number of zones.
2. Allocation of demand locations to distribution zones: In this problem, for a given number of distribution zones selected, the demand locations present in the field are allocated to different zones on the basis of their spatial distribution. For the systematic design space exploration stage, this problem is treated as an optimization problem. For targeted exploration, it is treated as an options generator.
3. Selection of layout system: In this problem, the layout system is selected from two options: a tree layout system or a radial layout system. This problem is treated as an options generator. The available options consideration approach is used to consider both the available options in systematic design space exploration stage.
4. Pipeline network design for sub-mains and mains: In this problem, the pipeline networks for the sub-mains that connect between the various demand locations in a distribution zone and the network for the distribution mains that connect between the reservoir/source location and various sub-mains are generated. This problem is treated as an options generator. Multiple high performing solutions can be generated using a problem specific solution algorithm depending on the type of layout system selected.

Referring to steps of FIG. 2, at step 204 of the method of the present disclosure, the one or more hardware processors 104 generate, by using a design configuration generator, a plurality of diverse design configurations using the one or more design inputs, and the one or more design constraints. The above portion in broken line property in FIG. 2 depicts a systematic design space exploration (SDSE) for water distribution system use case.

In the systematic design space exploration stage, the systematic division happens primarily through two methods for options generation which are given below.
a. Logical division of design space
b. Available options consideration

These methods are selected strategically for applicable sub-problems classified as options generators. The various regions of the design space are identified by the usage of above divisions. The rest of the methods for options generator help to generate diverse options for the concerned sub-problems but will not contribute to design space division. FIG. 5, with reference to FIGS. 1 through 4, depicts a block diagram illustrating options generation strategies as implemented by the system 100 of FIG. 1, in accordance with an embodiment of the present disclosure.

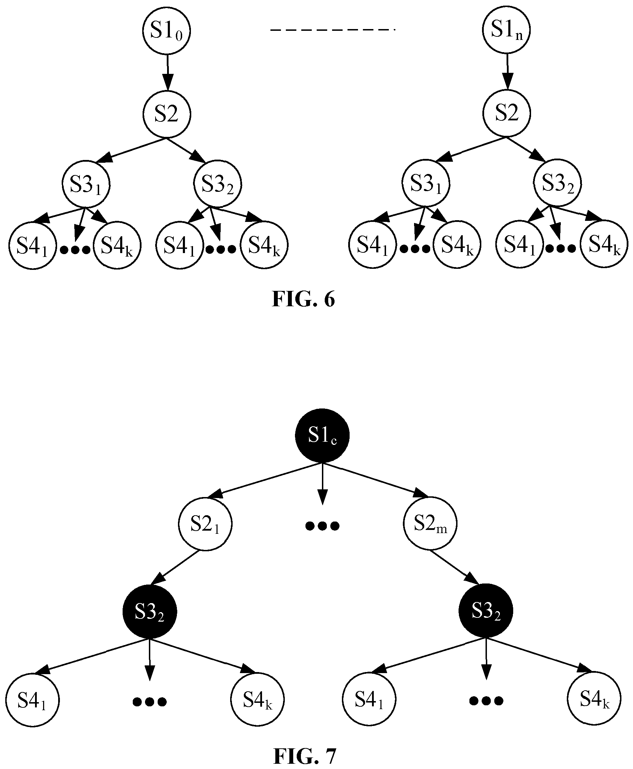

In the SDSE stage, a set of algorithmic approaches that can be used to generate solutions for various identified sub-problems are given below.
S 1. Determine the number of distribution zones: This problem is treated as an options generator and the logical division of design space approach is used to vary the number of distribution zones between a lower limit and upper limit based on feasibility. The upper limit of the number of distribution zones can be identified based on flowrate demand that can be satisfied by a given tree/radial cell of the layout system. The lower limit also can be guided by heuristic rules likewise. For the SDSE stage, the number of distribution zones are varied between these value limits (S1₀ to S1ₙ) and corresponding remaining solution fragments corresponding to the various sub-problems are generated as shown in FIG. 6.
S2. Allocation of demand locations to distribution zones: This problem is treated as an optimization problem. An algorithmic approach such as a k-means clustering approach can be used to allocate the demand locations to various distribution zones as per the number of distribution zones decided in S 1.
S3. Selection of layout system: This problem is treated as an options generator and the available options of layout systems are considered which are the tree layout system and radial layout system. Both the options are considered to generate design configurations.
S4. Pipeline network design for sub-mains and mains: A problem specific algorithm can be created for generating high performing network solutions considering the various design criteria defined. 'k' solution options are generated for the sub-problem (S4₁ to S4ₖ).

The graphical representation of the design configuration synthesis for the use case for SDSE stage is shown in FIG. 6. FIG. 6, with reference to FIGS. 1 through 6, depicts systematic design space exploration (SDSE) for water distribution system use case, in accordance with an embodiment of the present disclosure. Each trajectory of node traversal from S1 to S4 represents a unique design configuration generated. The design space is divided into regions based on number of distribution zones and the type of layout system selected (S1 and S3).

Referring to steps of FIG. 3, at step 206 of the method of the present disclosure, the one or more hardware processors 104 evaluate (i) an associated diversity of each diverse design configuration from the plurality of diverse design configurations using the one or more diversity metrics, and (ii) the one or more design criteria and ranking the plurality of evaluated diverse design configurations. The various diverse design configurations generated can be evaluated based on the defined design criteria and diversity metrics and ranked accordingly. Each ranked diverse design configuration from the plurality of ranked diverse design configurations is compared with each other to determine level of difference therebetween. For instance, ranking is done to check on an individual level how different the top configurations are with respect to each other.

At step 208 of the method of the present disclosure, the one or more hardware processors 104 receive one or more potential regions of design space for an enhanced targeted exploration based on the plurality of ranked diverse design configurations. Based on the analysis of the results at SDSE stage, the designer may identify that the region of design space with number of distribution zones corresponding to S1_{c} and layout system corresponding to S3₂ solution has potential for better design configuration generation.

At step 210 of the method of the present disclosure, the one or more hardware processors 104 iteratively apply a targeted exploration on the one or more potential regions of design space, until one or more desired design configurations are obtained. Further, at step 212 of the method of the present disclosure, the one or more hardware processors 104 select at least one desired design configuration amongst the one or more desired design configuration. The steps 210 and 212 can be better understood by way of following description:

Accordingly, a targeted design space exploration (also referred as targeted exploration and interchangeably used herein) can be performed on the region as shown in FIG. 7. FIG. 7, with reference to FIGS. 1 through 7, depicts a targeted design space exploration (TDSE) for water distribution system use case, in accordance with an embodiment of the present disclosure. In this approach adopted by the system 100 of the present disclosure, enhanced exploration is performed in the selected region by generating more alternative corresponding to sub-problem: S2 and conditionally generating the remaining solution trajectories. To generate more options in S2, i.e., to allocate demand locations to distribution zones, a fuzzy c-means clustering approach can be used. The fuzzy c-means clustering approach can consider the spatial distribution of the demand locations and generate variations based on the variations in the membership function. After multiple iterations as required, the set of diverse design configurations (one or more desired design configuration alternatives) can be finalized for the early-stage design. Amongst the set of design configurations being finalized, at least one desired design configuration is selected amongst the one or more desired design configuration alternatives for early-stage generative design.

Embodiments of the present disclosure provides a framework for an early-stage generative design of engineering systems. More specifically, a logical division of design space approach is implemented amongst the various methods that can be taken for options generation which is specific to the objective of systematic design space exploration. Early-stage generative design of complex engineering systems is done by the system of the present disclosure which utilizes diversity metrics to identify diverse alternatives for a given requirement which are evaluated based on relevant criteria. Conventionally, the field of design treated the early-stage design problem as an optimization problem, where the obj ective was to maximize or minimize several performance and cost parameters while satisfying different problem constraints. The present disclosure addresses the problem of generating multiple design configurations during the early-stage design of complex engineering systems. By adopting generative design principles, the present disclosure and its system and method focus on optioneering and moves away from the conventional optimization approach. Moreover, the various steps involved in the generative design process described in the present disclosure combines hierarchical problem decomposition with an options generation approach.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors, one or more design inputs, one or more design constraints, one or more design criteria, and one or more diversity metrics from a designer (202);
generating, by using a design configuration generator via the one or more hardware processors, a plurality of diverse design configurations using the one or more design inputs, and the one or more design constraints (204);
evaluating, via the one or more hardware processors, (i) an associated diversity of each diverse design configuration from the plurality of diverse design configurations using the one or more diversity metrics, and (ii) the one or more design criteria and ranking the plurality of evaluated diverse design configurations (206);
receiving, via the one or more hardware processors, one or more potential regions of design space for an enhanced targeted exploration based on the plurality of ranked diverse design configurations (208);
iteratively applying a targeted exploration, via the one or more hardware processors, on the one or more potential regions of design space,
until one or more desired design configurations are obtained (210); and
selecting, via the one or more hardware processors, at least one desired design configuration amongst the one or more desired design configuration (212).

2. The processor implemented method as claimed in claim 1, wherein the one or more diversity metrics are used for evaluating an overall diversity of all the plurality of diverse design configurations.

3. The processor implemented method as claimed in claim 1, wherein each ranked diverse design configuration from the plurality of ranked diverse design configurations is compared with each other to determine level of difference therebetween.

4. The processor implemented method as claimed in claim 1, wherein the step of receiving, the one or more design inputs, the one or more design constraints, the one or more design criteria, and the one or more diversity metrics from the designer is preceded by:
analyzing an overall design problem, wherein the overall design problem is hierarchically decomposed into one or more constituents sub-problems;
performing, by using one or more pre-determined strategies, a classification of the one or more constituent sub-problems as one or more options generators or one or more optimization problems, wherein the one or more options generators are configured to identify one or more high performing solutions; and
selecting, by using the one or more pre-determined strategies, (i) a solution algorithm amongst one or more solution algorithms for the one or more optimization problems or (ii) a pre-determined option generation strategy for the one or more options generator based on the classification.

5. The processor implemented method as claimed in claim 4, wherein the one or more pre-determined strategies comprise a selection of at least one (i) a set of high performing diverse solutions, (ii) a logical division of a design space, (iii), an available options consideration, (iv) a multiple heuristic approaches usage, and (v) an adversarial neural network or a generative artificial intelligence technique.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive one or more design inputs, one or more design constraints, one or more design criteria, and one or more diversity metrics from a designer (202);
generate, by using a design configuration generator, a plurality of diverse design configurations using the one or more design inputs, and the one or more design constraints;
evaluate (i) an associated diversity of each diverse design configuration from the plurality of diverse design configurations using the one or more diversity metrics, and (ii) the one or more design criteria and ranking the plurality of evaluated diverse design configurations;
receive one or more potential regions of design space for an enhanced targeted exploration based on the plurality of ranked diverse design configurations;
iteratively apply a targeted exploration on the one or more potential regions of design space,
until one or more desired design configurations are obtained (210); and
select at least one desired design configuration amongst the one or more desired design configuration.

7. The system as claimed in claim 6, wherein the one or more diversity metrics are used for evaluating an overall diversity of all the plurality of diverse design configurations.

8. The system as claimed in claim 6, wherein each ranked diverse design configuration from the plurality of ranked diverse design configurations is compared with each other to determine level of difference therebetween.

9. The system as claimed in claim 6, wherein prior to receiving the one or more design inputs, the one or more design constraints, the one or more design criteria, and the one or more diversity metrics from the designer, the one or more hardware processors are configured by the instructions to enable:
analyzing an overall design problem, wherein the overall design problem is hierarchically decomposed into one or more constituents sub-problems;
performing, by using one or more pre-determined strategies, a classification of the one or more constituent sub-problems as one or more options generators or one or more optimization problems, wherein the one or more options generators are configured to identify one or more high performing solutions; and
selecting, by using the one or more pre-determined strategies, (i) a solution algorithm amongst one or more solution algorithms for the one or more optimization problems or (ii) a pre-determined option generation strategy for the one or more options generator based on the classification.

10. The system as claimed in claim 9, wherein the one or more pre-determined strategies comprise a selection of at least one (i) a set of high performing diverse solutions, (ii) a logical division of a design space, (iii), an available options consideration, (iv) a multiple heuristic approaches usage, and (v) an adversarial neural network or a generative artificial intelligence technique.

11. One or more non-transitory machine-readable information storage mediums comprising one or more instructions which when executed by one or more hardware processors cause:
receiving one or more design inputs, one or more design constraints, one or more design criteria, and one or more diversity metrics from a designer ;
generating, by using a design configuration generator, a plurality of diverse design configurations using the one or more design inputs, and the one or more design constraints ;
evaluating (i) an associated diversity of each diverse design configuration from the plurality of diverse design configurations using the one or more diversity metrics, and (ii) the one or more design criteria and ranking the plurality of evaluated diverse design configurations ;
receiving one or more potential regions of design space for an enhanced targeted exploration based on the plurality of ranked diverse design configurations ;
iteratively applying a targeted exploration, on the one or more potential regions of design space,
until one or more desired design configurations are obtained; and
selecting at least one desired design configuration amongst the one or more desired design configuration.

12. The one or more non-transitory machine-readable information storage mediums as claimed in claim 11, wherein the one or more diversity metrics are used for evaluating an overall diversity of all the plurality of diverse design configurations.

13. The one or more non-transitory machine-readable information storage mediums as claimed in claim 11, wherein each ranked diverse design configuration from the plurality of ranked diverse design configurations is compared with each other to determine level of difference therebetween.

14. The one or more non-transitory machine-readable information storage mediums as claimed in claim 11, wherein the step of receiving the one or more design inputs, the one or more design constraints, the one or more design criteria, and the one or more diversity metrics from the designer is preceded by:
analyzing an overall design problem, wherein the overall design problem is hierarchically decomposed into one or more constituents sub-problems;
performing, by using one or more pre-determined strategies, a classification of the one or more constituent sub-problems as one or more options generators or one or more optimization problems, wherein the one or more options generators are configured to identify one or more high performing solutions; and
selecting, by using the one or more pre-determined strategies, (i) a solution algorithm amongst one or more solution algorithms for the one or more optimization problems or (ii) a pre-determined option generation strategy for the one or more options generator based on the classification.

15. The one or more non-transitory machine-readable information storage mediums as claimed in claim 14, wherein the one or more pre-determined strategies comprise a selection of at least one (i) a set of high performing diverse solutions, (ii) a logical division of a design space, (iii), an available options consideration, (iv) a multiple heuristic approaches usage, and (v) an adversarial neural network or a generative artificial intelligence technique.
